# NEUE EUROPÄISCHE PATENTSCHRIFT

(11) **EP 0 693 165 B2**
(45) Veröffentlichungstag und Bekanntmachung des Hinweises auf die Entscheidung über den Einspruch: **17.11.2004**
(45) Hinweis auf die Patenterteilung: 01.10.1997
(21) Anmeldenummer: 94913548.7
(22) Anmeldetag: 07.04.1994
(51) Int. Cl.: F16C 29/08, F16B 37/14

(54) **LINEARBEWEGUNGSFÜHRUNG**
LINEAR MOVEMENT GUIDE
GLISSIERE DE GUIDAGE A DEPLACEMENT LINEAIRE

(30) Priorität: 08.04.1993 DE 4311641
(43) Veröffentlichungstag der Anmeldung: 24.01.1996
(73) Patentinhaber: Deutsche Star GmbH, 97424 Schweinfurt (DE)
(72) Erfinder: FAULHABER, Thomas, D-97493 Bergrheinfeld (DE)
(74) Vertreter: Prechtel, Jörg, Dipl.-Phys. Dr.
(86) Internationale Anmeldenummer: PCT/EP1994/001080
(87) Internationale Veröffentlichungsnummer: WO 1994/024445

(56) Entgegenhaltungen:
- EP-A- 0 124 648
- EP-A- 0 311 895
- DD-A- 237 805
- DE-A- 2 933 442
- DE-A- 3 323 224
- DE-A- 3 812 505
- FR-A- 1 600 992
- JP-A- 2 292 515
- JP-U- 1 098 920
- US-A- 3 845 993
- US-A- 4 682 899
- INA-druckschrift "Rollenumlaufeinheiten, Baureihe RUE" Lexikon Feinwerktechnik Deutsche Verlagsanstalt Stuttgart 1969, Seite 374
- Firmenprospekt Tehalit Katalog 92
- Elektro-Installationskanal-und Verdrahtungskanal Systeme Hösl "Die neuzeitliche und vorschriftsmäßige Elektro-Installation" 8 Auflage Hüthig Heideleberg 1977, Seiten 168-171,

## Beschreibung

Die Erfindung betrifft eine Linearbewegungsführung mit einer Führungsschiene und einem im Querschnitt im wesentlichen U-förmigen, die Führungsschiene zumgreifenden Schlitten, welches mit Roll-oder Wälselementen zu Abstüzung an der Führungsschiene vergesehen ist, wobei die Führungsschiene mit abdeckbaren Durchgangsöffnungen für Befestigungselemente zur Anbringung der Führungsschiene an einem Träger versehen ist, die in einer vom Träger abgewandten Oberfläche der Führungsschiene ausmünden und die im Bewegungsbereich des Schlittens angeordnet sind.

Linearbewegungsführungen werden standardmäßig zur Linearführung von Bauteilen mit hoher Präzision eingesetzt, wie z.B. zur Führung von Maschinenbaugruppen an Werkzeugmaschinen oder zur Bewegung von Meßköpfen. Linearbewegungsführungen werden auch in Umgebungen mit hohem Verschmutzungsgrad eingesetzt. Um hierbei zu vermeiden, daß die im Schlitten angeordneten Roll- oder Wälzelemente verschmutzen, was zu erhöhtem Verschleiß sowie u.U. zum Verlust der Führungspräzision führen würde, sind Maßnahmen getroffen, um ein Eindringen von Schmutz oder Staub in das Schlitteninnere zu verhindern. Häufig werden hierzu an den beiden zur Laufrichtung senkrechten Stirnflächen des Schlittens Lippendichtungen vorgesehen, die entlang der Oberfläche der Führungsschiene sowie der Seitenflächen der Führungsschiene gleiten, um Staub- oder Schmutzpartikel von der jeweiligen Fläche abzustreifen.

Zur Befestigung der Führungsschiene einer üblichen Linearbewegungsführung ist die Führungsschiene mit Durchgangsöffnungen für entsprechende Befestigungselemente zur Anbringung der Führungsschiene an einem Träger versehen. Die Durchgangsöffnung kann beispielsweise abgestuft sein zur Aufnahme einer Befestigungsschraube mit Schraubenkopf, Da sich zwischen der Oberseite des Schraubenkopfs und der Oberfläche der Führungsschiene Staub und Schmutz ansammeln kann, der u.U. in den Innenraum des Führungsschlittens geraten kann, wenn dieser gerade die Durchgangsöffnung überquert, ist es bei einer gattungsgemäßen Linearbewegungsführung aus der DE 38 12 505 A1 bekannt, die Durchgangsöffnungen an der Oberfläche abzudecken, und zwar mit Hilfe einer streifenförmigen Platte, die in eine dem Plattenquerschnitt entsprechende Längsnut an der Oberseite der Führungsschiene eingesetzt ist, und die durch Niederhaiteblocks an beiden Plattenenden an der Führungsschiene festgeschraubt ist. Hierzu durchsetzt eine entsprechende Befestigungsschraube eine zugeordnete Durchgangsöffnung der Platte, bevor sie in ein entsprechendes Gewinde der Führungsschiene eindringt.

Eine andere Art der Abdeckung ist in der DE 38 12 505 A1 als bekannt angegeben, bei der die Längsnut durchgehend ausgebildet ist und mit einem Profil versehen ist, um die von einem Ende der Führungsschiene in die Längsnut eingesetzte Platte in der Längsnut zu halten, Hierbei besteht jedoch die Gefahr, daß bei großem Gleitwiderstand der Abstreifdichtung die Platte u. U. in Längsrichtung der Führungsschiene mitgenommen wird. Bei beiden bekannten Linearbewegungsführungen ist nicht nur der relativ hohe Bauaufwand aufgrund der in die Führungsschiene einzuarbeitenden Längsnut von Nachteil, sondern die praktisch unvermeidliche Ausbildung einer kleinen Stufe oder eines schmalen Spaltes zwischen den Längsränder der Platte und den Kanten zwischen der Oberfläche und den Nutseitenflächen. An dieser kantigen Stufe bzw. den kantigen Rändern des Spaltes mit u.U. variierender Spaltbreite längs der Führungsschiene gleitet die Abstreifdichtung entlang, und zwar in der Regel unter relativ hohem Anpreßdruck, um sicherzustellen, daß die besonders schmutzanfällige Oberseite der Führungsschiene zuverlässig abgestriffen wird. Dennoch ist nicht stets sichergestellt, daß Schmutzteilchen im Kantenbereich bzw. Spaltbereich nicht in das Innere des Schlittens gelangen.

Ferner ist es bekannt (Prospekt INA Lineartechnik oHG, datiert 04.06.1991, Seiten 4 und 5), die Durchgangsöffnungen mit einzelnen Verschlußkappen abzudecken, was bei einer entsprechenden Vielzahl von Durchgangsöffnungen aufwendig ist. Auch kann sich in dem praktisch unvermeidlichen Ringspalt zwischen der jeweiligen Verschlußkappe und dem Rand der Durchgangsöffnung Schmutz halten; die den Ringspalt begrenzenden Kanten von Verschlußkappe und Durchgangsöffnungsrand führen zu erhöhtem Verschleiß der Lippendichtung des Schlittens. Alternativ hierzu können die Durchgangsöffnungen auch mit Hilfe eines Metallklebebands aus einem dünnen Federstahlband mit einseitig aufgetragenem Klebefilm und mit an die Oberseite der Führungsschiene angepaßter Länge und Breite verschlossen werden. Selbst wenn das Metallklebeband mit äußerster Sorgfalt aufgeklebt wird, besteht bei exakt an die Breite der Oberseite der Führungsschiene angepaßten Metallklebeband die Gefahr, daß dieses stellenweise über den einen oder anderen Rand der Oberseite vorsteht und dort die Lippendichtung beschädigt. Wird sicherheitshalber ein schmäleres Federstahlband eingesetzt, so ergibt sich an den Oberseitenrändern jeweils eine Stufe mit Stufenhöhe entsprechend der Dicke von Federstahlband zuzüglich Klebeschicht. Dort kann sich wiederum Schmutz ablagern. Bei nicht exakt geradliniger Verlegung des Metallklebebands können wollenartige Verwerfungen auftreten, die die Funktion beeinträchtigen. Auch istfraglich, ob die Klebeverbindung unter extremen Betriebsbedingungen, wie diese z. B. bei Werkzeugmaschinen auftreten, ausreichende Langzeitstandfestigkeit aufweist.

U-Profile für verschiedene Einsatzzwecke sind bekannt, wie z. B. Kunststoff-Sockelprofile zur Verstärkung von Holzleisten (Georg Wurster: "Der Große Häfele"; 1971; Nagold, Seite 7.32) oder Stahlblech- und Kunststoffprofile als Kanal-Unterteile und Kanal-Deckel von Elektro-Installationskanälen (Prospekt Lanz Oensingen AG, Druckvermerk 0691-2000; Tehalit-Katalog 1992, Seiten 26 und 28; Hösel, Alfred, "Die neuzeitliche und vorschriftsmäßige Elektroinstallation", 8. Auflage, Hüthig, Heidelberg 1977, Seiten 168-171). Dabei dekken die U-Profile entweder einen durchgehend massiven Träger oder einen durchgehenden Hohlraum ab; auf höhere Präzision kommt es dabei nicht an. Der Fachmann auf dem Gebiet der hochpräsisen Führungsschienen, wie diese z. B. bei Werkzeugmaschinen oder Meßgeräten eingesetzt werden, wird sich für die Lösung des Problems der Reduzierung der Verschmutzungsgefahr des Schlitteninneren keine Anregungen auf dem Gebiet der Sockelprofile bzw. der Installationskanäle erwarten.

Der Erfindung liegt die Aufgabe zugrunde, eine Linearbewegungsführung der eingangs genannte Art bereitzustellen, welche bei einfacher Herstellbarkeit und Montage die Gefahr des Eindringens von Staub- und Schmutzpartikeln in den Schlitten Zuverlässig verringert.

Diese Aufgabe wird dadurch gelost, daß ein auf die Führungsschiene aufgeschobenes oder aufgeschnapptes, aus federndern Bandmaterial gebildetes Abdeckband vorgesehen ist aus einem die Oberseite der Führungsschiene über ihre gesamte, zur Führungsschienenlängsrlchtung senkrechte Breite bedeckenden Mittelabschnitt und zwei nach innen abgewinkelten, zur Führungsschienenlängsrichtung parallelen Randabschnitten zum Eingriff in je eine Hinterschneidung in den beiden an die Oberseite der Führungsschiene in Breitenrichtung folgenden Seitenflächen der Führungsschiene im Kantenbereich zwischen Oberseite und Seitenfläche.

Das Abdeckband bedeckt erfindungsgemäß die gesamte Oberseite der Führungsschiene, so daß sich für die Lippendichtung am Schlitten eine durchgehend glatte, ebene Oberseite der Führungsschiene ergibt, und Staub- oder Schmutzpartikel oder gar Werkstückspäne beim Einsatz der Linearbewegungsführung an einer Bearbeitungsrnaschine sich an der Oberseite nicht festsetzen können und somit zweriässig durch die Lippendichtung abgestriffen werden. Von Vorteil ist, daß in der Oberseite der Führungsschiene keine Längsnut einzuarbeiten ist. Aufgrund des unter Federvorspannung stehenden Eingriffs der Randabschnitte des Bandmaterials in die jeweilige Hinterschneidung an der Seite der Führungsschiene ergibt sich ein zuverlässiger Zusammenhalt von Abdeckband und Führungsschiene. Die Montage ist besonders erleichtert. Hierzu ist das Abdeckband lediglich in schräger Stellung mit einem Randabschnitt in die entsprechende Hinterschneidung einzusetzen und dann auf die Oberseite der Führungsschiene hin zu kippen , bis der andere Randabschnitt in die entsprechende Hinterschneidung einfedert. Zumindest bei relativ kurzen Führungsschienen kann das Abdeckband auch auf die Führungsschiene aufgeschoben werden.

Um zuverlässig für ausreichende Andruckkraft der Randabschnitle auch bei gewissen Fertigungstoleranzen, insbesondere bei der Herstellung des Abdeckbands, zu sorgen, wird vorgeschlagen, daß eine Anlagefläche der Hinterschneidung zur Anlage am jeweiligen Randabschnitt mit der Oberfläche einen Hinterschneidungswinkel bildet, der größer ist als ein zweischen dem Mittelabschnitt und dem Randabschnitt gebildeter Abknickwinkel. Aufgrund dieser Maßnahme liegen die äußeren Ränder der Randabschnitte stets zuverlässig unter der gewünschten Federkratt an der Anlagefläche der.Hinterschneidung an.

Hierbei ist von Vorteil, wenn der Hinterschneidungswinkel ca. 3 bis 10°, vorzugsweise ca. 5° größer ist als der Abknickwinkel, Als besonders günstig hat sich herausgestellt, wenn der Abknickwinkel etwa 65 bis 75°, vorzugsweise etwa 70°, beträgt.

Um das Aufschnappen des Abdeckbands zu erleichtem, wird vorgeschlagen, daß die Kante zwischen Oberfläche und Anlagefläche abgerundet ist.

In einer besonders bevorzugten Ausführungsform der Erfindung ist vorgesehen, daß das Abdeckband aus gehärtetem Federband besteht. Das gehärtete Federband zeichnet sich durch hohe Verschleiß- und Temperaturbeständigkeit aus. Auch ist ein Nachlassen der Federkraft nicht zu befürchten. Auch besteht die Möglichkeit, ein ziemlich dünnes Federband mit einer Dicke von 0,1 bis 0,2, vorzugsweise etwa 0,15 mm einzusetzen, so daß ein Umrüsten einer Linearbewegungsführung durch Verwenden des Abdeckbands im allgemeinen keine sonstigen Änderungen, insbesondere der Lippendichtung, erfordert. Die äußeren Ränder der beiden Randabschnitte bilden mit der Anlagefläche eine entsprechende Stufe mit einer der Abdeckbanddicke entsprechenden Stufenhöhe. Da die Stufe jedoch nicht an der schmutzexponierten Oberseite der Führungsschiene liegt, sondern an den Seiten der Führungsschiene, noch dazu geschützt in der jeweiligen Hinterschneidung, besteht nicht die Gefahr, daß sich hier Staub-oder Schmutzpartikel ansammeln, die dann u.U. in das Schlitteninnere eindringen könnten.

Die Erfindung wird im folgenden an einem bevorzugten Ausführungsbeispiel anhand der Zeichnung erläutert. Es zeigt:
- Fig. 1: einen Querschnitt einer an einem Träger montierten Führungsschiene im Bereich einer Befestigungsschraube bei der Montage des Abdeckbands;
- Fig. 2: die Anordnung entsprechend Fig. 1 nach Montage des Abdeckbands;
- Fig. 3: das Detail A in Fig. 2 mit vergrößertem Maßstab; und
- Fig. 4: eine vereinfachte isometrische Gesamtansicht einer Linearbewegungsführung mit Abdeckband auf der Führungsschiene.

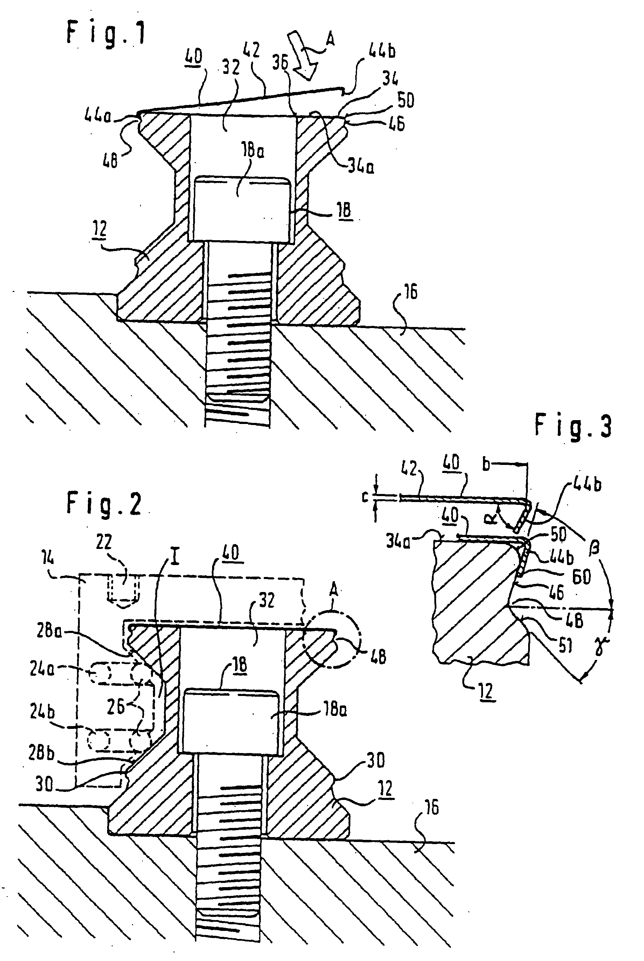

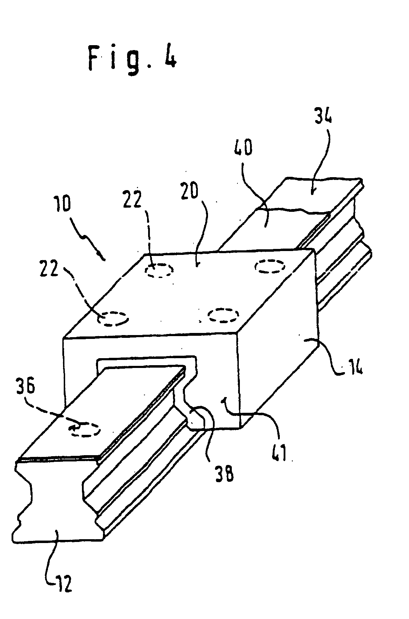

Die in Fig. 4 insgesamt dargestellte Linearbewegungsführung 10 besteht aus einer Führungsschiene 12 und einem längs der Führungsschiene 12 beweglich gelagerten Schlitten 14. Die Führungsschiene 12 ist an einem in den Fig. 1 und 2 angedeuteten Träger 16, z.B. Maschinen rahmen, mit Hilfe wenigstens zweier Befestigungsschrauben 1B im Bereich der beiden Führungsschienenenden befestigbar. Am Führungsschlitten 14 ist das linear zu bewegende Teil, beispielsweise Werkzeugträger oder Meßgerätekopf, befestigbar, beispielsweise mit Hilfe von Befestigungsschrauben, die in an der Oberseite 20 des Schlittens 14 ausmündende Gewindebohrungen 22 einschraubbar sind. Der Schlitten 14 stützt sich in üblicher Weise über Roll- und Wälzelemente an der Schiene 12 ab. In Fig. 2 sind zwei geschlossene Kugelumlaufbahnen 24a und 24b angedeutet mit Kugeln 26, die sich an zwei nach innen geneigten Rollflächen 28a und 28b jeweils an beiden Führungsschienen-Längsseiten 30 abrollend abstützen. In Fig. 2 ist links mit unterbrochenen Linien die entsprechende Ausgestaltung des Schlittens angedeutet. Die rechte Hälfte ist dementsprechend ergänzt zu denken.

Anstelle von Kugeln können auch andere Wälzkörper eingesetzt werden.

Zur Aufnahme der bereits erwähnten Befestigungsschrauben 1B ist die Führungsschiene 12 jeweils mit einer entsprechenden, abgestuften Durchgangsöffnung 32 versehen, die in der dem Träger 16 gegenüberliegenden Oberseite 34 der Führungsschiene 12 ausmündet, unter Bildung einer relativ scharfen kreisringförmigen Kante 36. Je nach Art der Belastung und Länge der Führungsschiene 12 können zwischen den Führungsschienenenden auch weitere Schraubbefestigungen erforderlich sein mit entsprechenden Durchgangsöffnungen 32 in der Führungsschiene 12.

Häufig wird der vom im Querschnitt U-förmigen Schlitten 14 umgrenzte und größtenteils durch die Führungsschiene 12 ausgefüllte Innenraum I des Schlittens 14 durch eine dem Umriß der Führungsschiene 12 im wesentlichen folgende Lippendichtung 38 an beiden Stirnseiten 41 des Schlittens 14 abgedichtet. Auf diese Weise soll das Eindringen von Staub- oder Schmutzpartikeln oder von Werkstückspänen in den Innenraum I und damit in den Bereich der Kugeln 26 verhindert werden. Zumindest bei denjenigen Durchgangsöffnungen 32, die während des Betriebs vom Schlitten 14 überfahren werden, besteht an sich die Gefahr, daß in diese Durchgangsöffnungen 32 (oberhalb der Köpfe 18a der Befestigungsschrauben) angesammelter Staub, Schmutz oder Werkstückspäne bei der Schlittenüberfahrt in den Schlitteninnenraum I eindringen. Auch führt das Abfahren der Kante 36 durch die Lippendichtung zu einer erhöhten Beanspruchung der Dichtung.

Um dem abzuhelfen, wird ein aus federndem Bandmaterial, nämlich gehärtetem Federband, bestehendes Abdeckband 40 auf die Oberseite 34 der Führungsschiene 12 aufgeschnappt. Hierzu besteht das Abdeckband 40 aus einem ebenen Mittelabschnitt 42 mit einer die entsprechende Breite der ebenen Oberfläche 34a der Oberseite 34 geringfügig übersteigenden Breite b sowie aus zwei Randabschnitten 44a und 44b. Die Randabschnitte 44a,44b sind jeweils nach unten und aufeinander zu abgewinkelt mit einem Abknickwinkel a (Fig. 3), der kleiner als 90° ist und etwa 65 bis 75°, am besten etwa 70°, beträgt.

Im montierten Zustand gemäß Fig. 2 und Fig. 3 unten, liegt der jeweilige Randabschnitt 44b an einer Anlagefläche 46 einer Hinterschneidung 48 unterhalb der jeweiligen Seitenkante 50 der Führungsschiene 12 zwischen Oberseite 34 und Längsseite 30. Die Anlagefläche 46 bildet zusammen mit der ebenen Oberseite 34a einen ebenfalls 90° unterschreitenden Hinterschneidungswinkel B. Dieser ist ca. 3 bis 10°, am besten ca. 5° größer als der Abknickwinkel α, also etwa 75°.

An die Anlagefläche 46 in Richtung weg von der Oberfläche 34a schließt sich eine weitere Schrägfläche 51 an, die mit der Anlagefläche 46 einen 90° übersteigenden Winkel (β + γ) von am besten etwa 120° bildet. Da die Anlagefläche 46 für den jeweiligen Randabschnitt 44a oder 44b an der im allgemeinen zum Träger 16 hin senkrecht abfallenden Längsseite 30 der Führungsschiene 12 ausgebildet ist und noch dazu aufgrund des Winkels α von weniger als 90°, von oben gesehen, nach unten und einwärts abfällt und somit eine Art Hinterschneidung bildet, können sich an der Anlagefläche 46 keine Schmutz- oder Staubpartikel oder gar Werkstückspäne anlagem.

Die Montage des Abdeckbands 40 kann zumindest bei geringer Führungsschienenlänge dadurch erfolgen, daß man das Abdeckband 40 an einem Führungsschienenende ansetzt und auf die Führungsschiene aufschiebt unter ständigem Eingriff der beiden Randabschnitte 44a und 44b in die jeweilige Hinterschneidung 48.

Besonders einfach und zudem unabhängig von der Führungsschienenlänge ist die Montageart, wie diese in den Fig. 1 und 2 angedeutet ist. Hierbei wird das Abdeckband schräg auf die Führungsschiene 12 aufgesetzt und beispielsweise der in den Fig. 1 und 2 linke Randabschnitt 44a in die zugehörige Hinterschneidung 48 eingesetzt. Anschließend wird das Abdeckband auf die Oberseite 34 der Führungsschiene 12 heruntergeklappt (Pfeil A in Fig. 1), bis auch der rechte Randabschnitt 44b in die entsprechende Hinterschneidung 48 einrastet. Erleichtert wird dies durch die in Fig. 3 dargestellte relativ starke Abrundung der Kante 50 zwischen der ebenen Oberfläche 34a und der Anlagefläche 46. Da der Abknickwinkel a des noch nicht montierten Bandes kleiner als der Hinterschneidungswinkel ist, ergibt sich nach der Montage des Abdeckbandes 40 ein federnder Andruck des äußeren Randes 60 des Randabschnitts 44b an der Anlagefläche 46 auch bei gewissen Fertigungsungenauigkeiten.

Das Abdeckband 40 trägt kaum auf, insbesondere bedarf es keiner Formanpassung der Lippendichtung 38, da die Dicke c des Abdeckbands 40 lediglich 0,1 bis 0,2 mm, am besten etwa 0,15 mm, beträgt.

## Patentansprüche

1. Linearbewegungsführung (10) mit einer Führüngsschiene (12) und einem im Querschnitt im wesentlichen U-förmigen, die Führungsschiene (12) umgreifenden Schlitten (14), welcher mit Roll- oder Wälzelementen (26) zur Abstützung an der Führungsschiene (12) versehen ist, wobei die Führungsschiene (12) mit abdeckbaren Durchgangsöffnungen (32) für Befestigungselemente (18) zur Anbringung der Führungsschiene (12) an einem Träger versehen ist, die in einer vom Träger (16) abgewandten Oberseite (34a) der Führungsschiene (12) ausmünden und die im Bewegungsbereich des Schlittens (14) angeordnet sind, **gekennzeichnet durch** ein auf die Führungsschiene (12) aufgeschobenes oder aufgeschnapptes, aus federndem Bandmaterial gebildetes Abdeckband (40) aus einem die Oberseite (34a) der Führungsschiene (12) über ihre gesamte, zur Führungsschienontängsrichtung senkrechte Breite bedeckenden Mittelabschnitt (42) und zwei nach innen abgewinkelten zur Führungsschienenlängsrichtung parallelen Randabschnitten (44a, 44b) zum Eingriff in je eine Hinterschneidung (48) in den beiden an die Oberseite (34a) der Führungsschiene (12) in Breitenrichtung folgenden Seitenflächen (30) der Führungsschiene (12) im Kantenbereich zwischen Oberseite (34a) und Seitenfläche (30).

2. Linearbewegungsführung nach Anspruch 1,
**dadurch gekennzeichnet,**
**daß** eine Anlagefläche (46) der Hinterschneidung (48) zur Anlage am jeweiligen Randabschnitt (44a, 44b) mit der Oberfläche (34a) einen Hinterschneidungswinkel (β) bildet, der größer ist als ein zwischen dem Mittelabschnitt (42) und dem Randabschnitt (44a,44b) des freien Abdeckbandes (40) gebildeter Abknickwinkel (α).

3. Linearbewegungsführung nach Anspruch 2,
**dadurch gekennzeichnet**
**daß** der Hinterschneidungswinkel (β) ca. 3 bis 10°, vorzugsweise ca. 5° größer ist als der Abknickwinkel (α).

4. Linearbewegungsführung nach Anspruch 2 oder 3,
**dadurch gekennzeichnet,**
**daß** der Abknickwinkel (α) etwa 65 bis 75°, vorzugsweise etwa 70°, beträgt.

5. Linearbewegungsführung nach einem der vorhergehenden Ansprüche,
**dadurch gekennzeichnet**
**daß** die Kante (50) zwischen Oberfläche (34a) und Anlagefläche (46) abgerundet ist.

6. Linearbewegungsführung nach einem der vorhergehenden Ansprüche,
**dadurch gekennzeichnet,**
**daß** das Abdeckband (40) aus gehärtetem Federband besteht.

7. Linearbewegungsführung nach Anspruch 6,
**dadurch gekennzeichnet,**
**daß** das Abdeckband (40) eine Dicke (c) von 0,1 bis 0,2 mm, vorzugsweise etwa 0,15 mm, aufweist.

## Claims

1. Linear motion guide (10) having a guide rail (12) and a slide (14) substantially U-shaped in cross-section which embraces the guide rail (12), which slide is provided with rolling or roller elements (26) for support on the guide rail (12), the guide rail (12) being provided with coverable through holes (32) for fastening elements (18) for mounting the guide rail (12) on a support, which holes open in a top side (34a) of the guide rail (12) facing away from the support (16) and which are arranged in the region of motion of the slide (14),
**characterized by**
a cover band (40) made of springy band material which is slipped or snapped on the guide rail (12) and which consists of a center section (42) covering the top side (34a) of the guide rail (12) over its entire width perpendicular to the longitudinal direction of the guide rail, and two edge sections (44a, 44b) parallel to the longitudinal direction of the guide rail and bent inward, for engagement in an undercut (48) in each of the two side faces (30) of the guide rail (12) which follow the top side (34a) of the guide rail (12) in the direction of its width, in the edge region between top side (34a) and side face (30).

2. Linear motion guide according to claim 1,
**characterized in that**,
a contact surface (46) of the undercut (48) for contacting the respective edge section (44a, 44b) forms an undercut angle (β) with the top side (34a) which is greater than a sharp angle (α) formed between the center section (42) and the edge section (44a, 44b) of the free cover band (40).

3. Linear motion guide according to claim 2,
**characterized in that**
the undercut angle (β) is about 3° to 10°, preferably about 5°, greater than the sharp angle (α).

4. Linear motion guide according to claim 2 or 3,
**characterized in that**
the sharp angle (α) amounts to about 65° to 75°, preferably about 70°.

5. Linear motion guide according to any of the preceding claims,
**characterized in that**
the edge (50) between top side (34a) and contact surface (46) is rounded.

6. Linear motion guide according to any of the preceding claims,
**characterized in that**
the cover band (40) consists of hardened spring band.

7. Linear motion guide according to claim 6,
**characterized in that**
the cover band (40) has a thickness (c) of 0.1 to 0.2 mm, preferably about 0.15 mm.

## Revendications

1. Glissière de guidage à déplacement linéaire (10) comportant un rail de guidage (12) et un coulisseau (14) de section transversale sensiblement en forme de U, entourant le rail de guidage (12), coulisseau qui est pourvu d'éléments de roulement (26) pour son appui sur le rail de guidage (12), le rail de guidage (12) étant pourvu d'ouvertures de passage (32) recouvrables, destinées à des éléments de fixation (18), pour assurer la fixation du rail de guidage (12) sur un support, qui débouchent dans une face supérieure (34a) du rail de guidage (12), opposée au support (16) et sont pratiquées dans la zone de déplacement du coulisseau (14), **caractérisée par** une bande de recouvrement (40) enfilée ou enclenchée sur le rail de guidage (12), réalisée dans un feuillard élastique, constituée d'une section médiane (42) qui recouvre la face supérieure (34a) du rail de guidage (12) sur toute sa largeur perpendiculaire au sens longitudinal du rail de guidage et de deux sections marginales (44a, 44b) repliées vers l'intérieur et parallèles au sens longitudinal du rail de guidage, dont chacune est destinée à s'engager dans une contre-dépouille (48) pratiquée dans les deux surfaces latérales (30) du rail de guidage (12) qui sont contiguës à la face supérieure (34a) du rail de guidage (12) dans le sens de la largeur, dans la zone d'arête située entre la face supérieure (34a) et la surface latérale (30).

2. Glissière de guidage à déplacement linéaire selon la revendication 1, **caractérisée en ce qu'**une surface d'appui (46) de la contre-dépouille (48), servant à l'appui sur la section marginale (44a, 44b) correspondante, forme, avec la surface (34a), un angle de contre-dépouille (β), qui est supérieur à un angle de repli (α) formé entre la section médiane (42) et la section marginale (44a, 44b) de la bande de recouvrement (40) libre.

3. Glissière de guidage à déplacement linéaire selon la revendication 2, **caractérisée en ce que** l'angle de contre-dépouille (β) est supérieur à l'angle de repli (α) d'environ 3 à 10°, de préférence d'environ 5°.

4. Glissière de guidage à déplacement linéaire selon la revendication 2 ou 3, **caractérisée en ce que** l'angle de repli (α) est d'environ 65 à 75°, de préférence d'environ 70°.

5. Glissière de guidage à déplacement linéaire selon l'une des revendications précédentes, **caractérisée en ce que** l'arête (50) située entre la surface (34a) et la surface d'appui (46) est arrondie.

6. Glissière de guidage à déplacement linéaire selon l'une des revendications précédentes, **caractérisée en ce que** la bande de recouvrement (40) est constituée par un feuillard trempé.

7. Glissière de guidage à déplacement linéaire selon la revendication 6, **caractérisée en ce que** la bande de recouvrement (40) présente une épaisseur (c) de 0,1 à 0,2 mm, de préférence d'environ 0,15 mm.
